# EUROPÄISCHE PATENTSCHRIFT

(11) **EP 1 857 085 B1**
(45) Veröffentlichungstag und Bekanntmachung des Hinweises auf die Patenterteilung: **26.08.2009**
(21) Anmeldenummer: 07009569.0
(22) Anmeldetag: 12.05.2007
(51) Int. Cl.: A61G 3/06, B60P 1/43

(54) **Ausfahrbare Einstiegsrampe für Fahrzeuge des öffentlichen Personennah- und fernverkehrs**
Retractable ramp for vehicles in public urban and long-distance passenger transport networks
Rampe d'accès démontable pour véhicules de transport en commun régionaux et longue distance

(30) Priorität: 20.05.2006 DE 202006008079 U
(43) Veröffentlichungstag der Anmeldung: 21.11.2007
(73) Patentinhaber: Gebr. Bode GmbH & Co. KG, 34123 Kassel (DE)
(72) Erfinder: Schröder, Michael, 34368 Trendelburg (DE)
(74) Vertreter: Bauer Vorberg Kayser Patentanwälte

(56) Entgegenhaltungen:
- EP-A- 1 595 737
- FR-A- 2 887 504

## Beschreibung

Die Erfindung betrifft eine ausfahrbare Einstiegsrampe für Fahrzeuge des öffentlichen Personennah- und -fernverkehrs mit den Merkmalen aus dem Oberbegriff des Patentanspruchs 1.

Eine derartige Einstiegsrampe ist bekannt und in DE 20 2004 007 704 U beschrieben. Bei dieser bekannten Einstiegsrampe ist die Ausfahröffnung des Gehäuses mit einer beweglichen Verschlußklappe verschließbar, die oberhalb der oberen Kante der Ausfahröffnung des Gehäuses angelenkt ist und im heruntergeklappten Zustand das Gehäuse an der Vorderseite verschließt, während sie im hochgeklappten Zustand bei ausgefahrener Trittplatte unmittelbar an den Fahrzeugboden anschließend den Spalt zwischen der Türschwellenstufe und dem hinteren Ende der Trittplatte überbrückt. Die Führung der Verschlußklappe bei der Öffnungsbewegung erfolgt mittels eines an der Verschlußklappe angelenkten Führungshebels, der gelenkig mit einem Ende eines Führungselements verbunden ist, dessen anderes Ende am Gehäuse angelenkt ist. Im geschlossenen Zustand der Verschlußklappe sind der Führungshebel und das Führungselement zusammengeklappt und beim Ausfahren der Trittplatte werden Führungselement und Führungshebel auseinandergeklappt, wobei das Führungselement nach Verschwenkung in eine an der Trittplatte angeordnete Führungsbahn eingreift, in der es so geführt ist, dass die Verschlußklappe von der Trittplatte weg angehoben wird, bis das Führungselement in der letzten Phase der Ausfahrbewegung freigegeben wird, so dass die Verschlußklappe auf der Oberseite der Trittplatte aufliegt.

Eine Verriegelung der Verschlußklappe im geschlossenen Zustand ist nicht vorgesehen und die Verschlußklappe muß mittels eines besonderen Gelenks mit dem Fahrzeugboden oder dem Gehäuse verbunden sein.

Der Erfindung liegt die Aufgabe zugrunde, eine Einstiegsrampe mit den im Oberbegriff des Patentanspruchs 1 angegebenen Merkmalen so auszubilden, dass die Verschlußklappe nicht am Fahrzeugboden oder am Gehäuse angelenkt werden muß und dass sie im geschlossenen Zustand mit dem Gehäuse zur Abdichtung verriegelt werden kann.

Die Lösung dieser Aufgabe erfolgt erfindungsgemäß mit den Merkmalen aus dem kennzeichnenden Teil des Patentanspruchs 1. Vorteilhafte Weiterbildungen der Erfindung sind in den abhängigen Ansprüchen beschrieben.

Ein Grundgedanke der Erfindung besteht darin, die Verschlußklappe ausschließlich über das System von Führungshebeln mit dem Gehäuse der Einstiegsrampe zu verbinden und die Führungshebel so auszubilden und anzuordnen, dass die Verschlußklappe während der Ausfahrbewegung der Trittplatte um eine freie horizontale Achse nach oben verschwenkt wird und sich dabei auf die Oberseite der ausfahrenden Trittplatte auflegt. Weiterhin ist an der Verschlußklappe eine Verriegelungsvorrichtung vorgesehen, mit der sie im geschlossenen Zustand fest mit dem Gehäuse verriegelt wird.

Im folgenden wird anhand der beigefügten Zeichnungen ein Ausführungsbeispiel für eine Einstiegsrampe nach der Erfindung näher erläutert.

In den Zeichnungen zeigen:
- Fig. 1: in stark schematisierter Darstellung eine Einstiegsrampe in Seitenansicht bei ausgefahrener Trittplatte;
- Fig. 2: die Einstiegsrampe nach Fig. 1 in einer Draufsicht;
- Fig. 3: die Einstiegsrampe nach Fig. 1 und 2 in teilweise geschnittener Seitenansicht im eingefahrenen Zustand der Trittplatte;
- Fig. 4: in gegenüber Fig. 3 vergrößerter stark schematisierter Darstellung den Bereich Y4 aus Fig. 3;
- Fig. 5: in gegenüber Fig. 3 vergrößerter Darstellung den Bereich X5 aus Fig. 3;
- Fig. 6: in einer Darstellung analog Fig. 5 den Bereich X5 in einer ersten Phase der Ausfahrbewegung der Trittplatte;
- Fig. 7: im Bereich X5 in einer zweiten Phase der Ausfahrbewegung der Trittplatte;
- Fig. 8: den Bereich X5 kurz vor Ende der Ausfahrbewegung der Trittplatte;
- Fig. 9: den Bereich X5 bei vollständig ausgefahrener und arretierter Trittplatte.

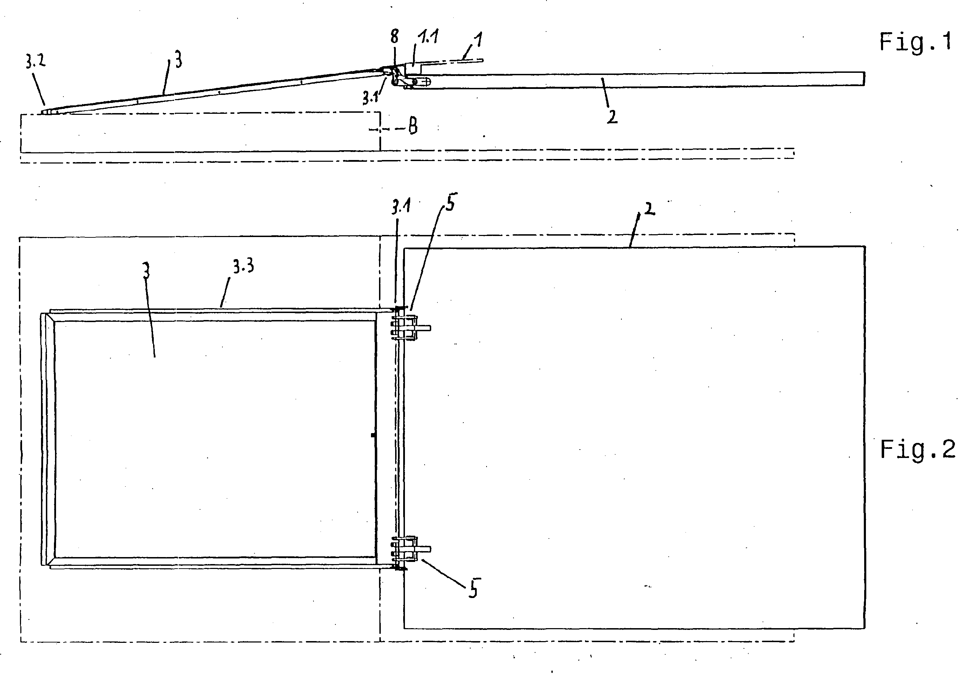

In den Figuren 1 bis 3 ist eine Einstiegsrampe dargestellt, die in nicht eigens dargestellter Weise im Einstiegsbereich eines Fahrzeugs des öffentlichen Personennah- oder -fernverkehrs angeordnet ist, von welchem nur ein im Türbereich liegender Teil 1 des Fahrzeugbodens und eine Türschwellenstufe 1.1 dargestellt sind.

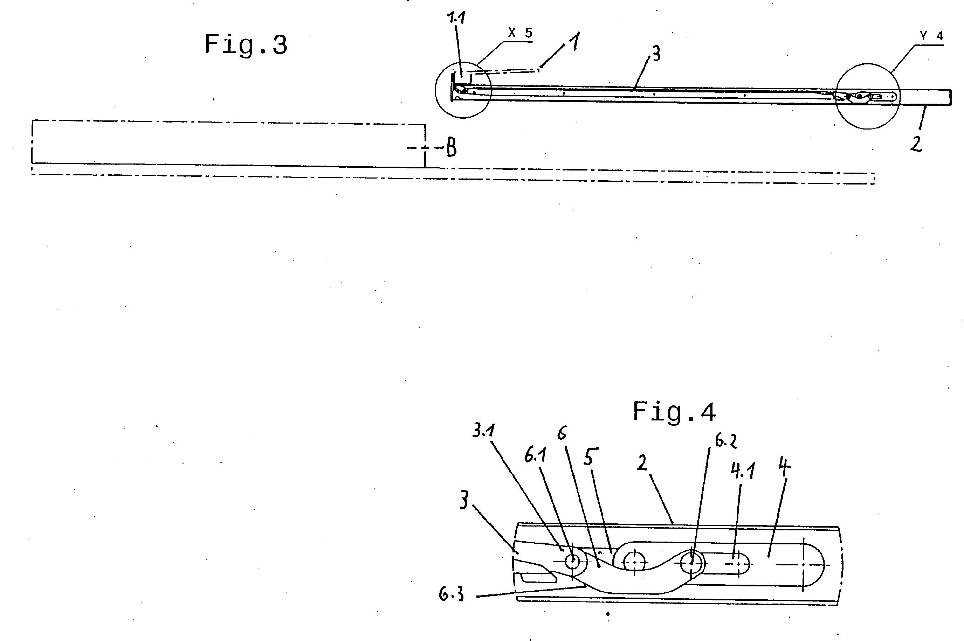

Unterhalb des Fahrzeugbodens 1 ist im Bereich unterhalb und hinter der Türschwellenstufe 1.1 ein Gehäuse 2 angeordnet, in welchem in nicht dargestellter und an sich bekannter Weise Antriebs- und Führungsmittel für eine Trittplatte 3 angeordnet sind, welche mittels der Antriebs- und Führungsmittel aus einer in Fig. 3 dargestellten Ruhestellung in eine in den Figuren 1 und 2 dargestellte Gebrauchsstellung ausgefahren werden kann. Hierzu ist das hintere Ende 3.1 der Trittplatte 3 über weiter unten näher erläuterte erste Führungshebel 5 an einem im Gehäuse 2 geführten, von den Antriebsmitteln in Ausfahrrichtung verschiebbaren Transportelement 4 angelenkt, das sich über die gesamte Breite der Einstiegsrampe erstreckt. Im dargestellten Ausführungsbeispiel sind zur Verbindung der Trittplatte 3 mit dem Transportelement 4 zwei beidseitig angeordnete Führungshebel 5 vorgesehen. Selbstverständlich können auch mehrere Führungshebel vorhanden sein.

Wie Fig. 1 zeigt liegt die Trittplatte 3 im ausgefahrenen Zustand mit ihrem vorderen Ende 3.2, beispielsweise auf der Oberfläche eines Bordsteins B auf und das hintere Ende 3.1 der Trittplatte 3 ist soweit angehoben, dass es im wesentlichen auf der Höhe der Türschwellenstufe 1.1 liegt, wobei in weiter unten näher dargestellter Weise der Spalt zwischen dem hinteren Ende 3.1 der Trittplatte 3 und der Türschwellenstufe 1.1 durch eine Verschlußklappe 8 überbrückt ist, so dass ein stufenloser Übergang vom Fahrzeugboden 1 auf die Trittplatte 3 ermöglicht ist.

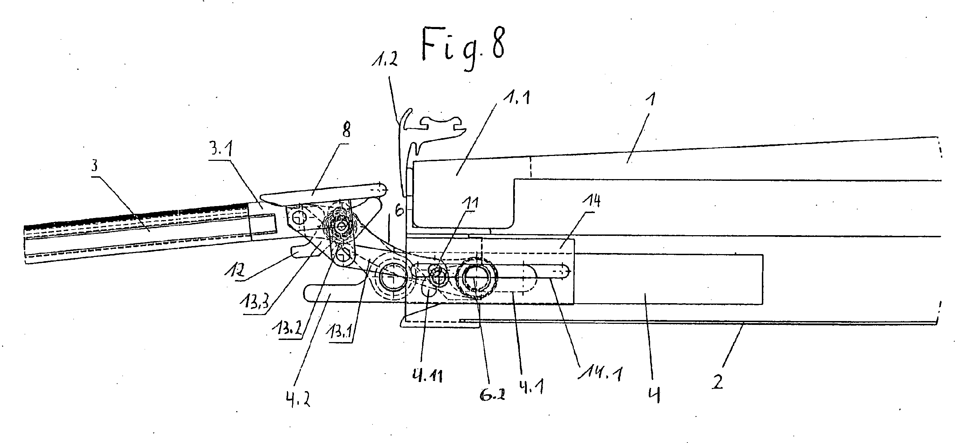

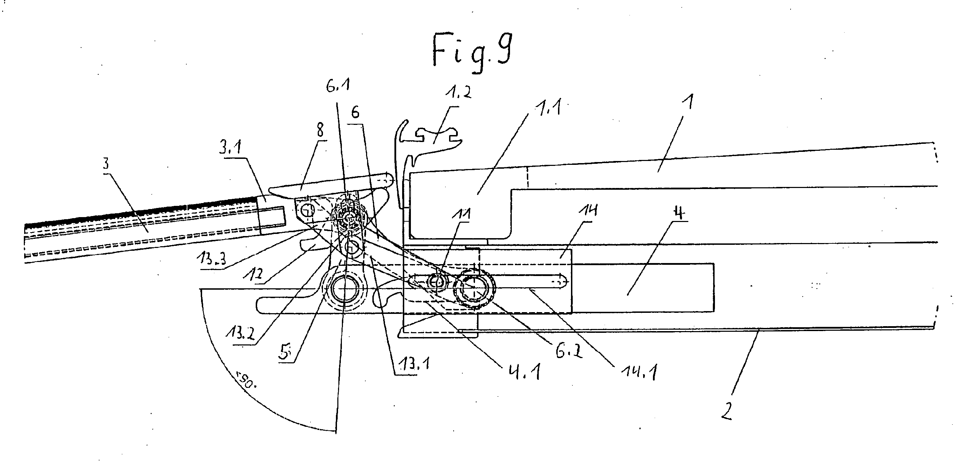

Der Antrieb des Transportelements 4 kann in nicht dargestellter und an sich bekannter Weise über Gewindespindeln oder auch Ketten- oder Riemenantriebe erfolgen. Im folgenden wird die gelenkige Verbindung zwischen dem hinteren Ende 3.1 der Trittplatte 3 und dem Transportelement 4 anhand der Figuren 4, 8 und 9 näher erläutert. Dabei ist das Transportelement 4 in den Fig. 8 und 9 genauer dargestellt als in Fig. 4.

Wie Fig. 4 zu entnehmen, liegen im eingefahrenen Zustand der Trittplatte 3- und auch im teilweise ausgefahrenen Zustand der Trittplatte 3 - die ersten Führungshebel 5 im Bezug auf das Transportelement 4 in einer im wesentlichen in Ausfahrrichtung verlaufenden, mit dem Transportelement 4 eine Totpunktlage bildenden, Strecklage. Am hinteren Ende 3.1 der Trittplatte 3 sind zusätzliche Führungselemente 6 mit ihrem einen Ende 6.1 angelenkt, deren anderes Ende 6.2 jeweils mit dem Transportelement 4 über ein Gelenk verbunden ist, welches in einem im Transportelement 4 in Ausfahrrichtung verlaufenden Langloch 4.1 verschiebbar geführt ist. Das Langloch 4.1 ist derart bemessen, dass in der Strecklage der Führungshebel 5 (Fig. 4) das Gelenk am vorderen Ende des Langlochs 4.1 liegt, wobei es in eine in Fig. 8 sichtbare Raste 4.11 einrastet. Wenn (Fig. 9) am Ende der Ausfahrbewegung die ersten Führungshebel 5 in eine Endlage hochgeklappt sind, wodurch das hintere Ende 3.1 der Trittplatte 3 angehoben wird, liegt das Gelenk am Ende 6.2 des Führungselementes 6 am hinteren Ende des Langlochs 4.1. Das Auslösen der Totpunktlage zwischen dem ersten Führungshebel 5 und dem Transportelement 4 kann in nicht dargestellter Weise dadurch geschehen, dass in der Bahn des Führungselementes 6 im Bereich der letzten Phase der Ausfahrbewegung am Gehäuse 2 eine Schrägfläche angeordnet ist, auf welche das Führungselement aufläuft. Im dargestellten Ausführungsbeispiel besitzt das Transportelement 4 am vorderen Ende einen Fortsatz 4.2, der das Aufrichten des Führungshebels 5 unterstützt. Der Führungshebel 5 richtet sich auf und gerät schließlich in die in Fig. 9 dargestellte, vollständig hochgeklappte, Stellung, in der das hintere Ende 3.1 der Trittplatte 3 auf die gewünschte Höhe angehoben ist. In dieser Stellung ist, wie Fig. 9 zu entnehmen, eine, das Wiederabsenken des hinteren Endes 3.1 der Trittplatte 3 verhindernde, Arretierungslage erreicht, indem der Führungshebel 5 mit der Richtung der Ausfahrbewegung die in Fig. 9 dargestellte Winkellage < 90° einschließt und sich damit in einer Übertotpunkt-Stellung befindet, in der er sich über das Führungselement 6 am Ende des Langlochs 4.1 im Transportelement 4 abstützt, so dass er nicht in Richtung auf das Gehäuse 2 abkippen kann.

Beim Wiedereinfahren der Trittplatte 3 bewegt sich das Transportelement 4 in das Gehäuse 2 hinein und zieht die Führungshebel 5 unter Absenkung des hinteren Endes 3.1 der Trittplatte 3 wieder in ihre gestreckte Lage zurück.

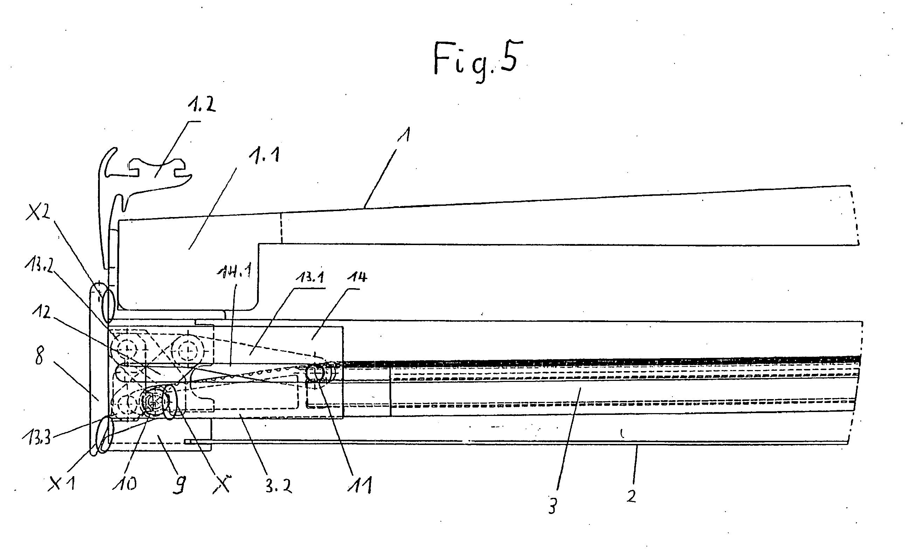

Im folgenden wird anhand der Figuren 5 bis 9 die Funktion der Verschlußklappe 8 bei der Ausfahr- und Einfahrbewegung der Trittplatte 3 näher erläutert.

Wie aus den Zeichnungen ersichtlich, ist die Verschlußklappe 8 weder am Fahrzeugboden 1, noch am Gehäuse 2 direkt angelenkt. Sie ist vielmehr ausschließlich über ein beidseitig angeordnetes System von Führungshebeln 13.1, 13.2 und 13.3 mit dem Gehäuse 2 verbunden. Dieses System von Führungshebeln besitzt jeweils einen zweiten Führungshebel 13.1, der an seinem in Ausfahrrichtung der Trittplatte 3 gesehen hinteren Ende über einen Führungsbolzen 11 in einem sich in Ausfahrrichtung erstreckenden Führungsschlitz 14.1 einer fest im Gehäuse 2 angeordneten Führungsplatte 14 verschiebbar und in einer vertikalen Ebene verschwenkbar geführt ist. Das vordere Ende des zweiten Führungshebels 13.1 ist mit den hinteren Enden eines dritten Führungshebels 13.2 und eines vierten Führungshebels 13.3 gelenkig verbunden, die jeweils ebenfalls in vertikalen Ebenen verschwenkbar sind. Die vorderen Enden des dritten und vierten Führungshebels sind jeweils an zwei in einer vertikalen Ebene liegenden Anlenkpunkten mit der Verschlußklappe 8 verbunden. Diese Anlenkpunkte befinden sich an einem Verriegelungshaken, der an der Innenseite der Verschlußklappe 8 abwärts gerichtet angeordnet ist und mit ihr fest verbunden ist.

Wie Fig. 5 zu entnehmen, greift die dieser Verriegelungshaken 12 im geschlossenen Zustand der Verschlußklappe 8 in einen Verriegelungsbolzen 10 ein, der am vorderen Ende 3.2 der Trittplatte 3 angeordnet ist. Dadurch, dass der im Bereich X in Fig. 5 am Verriegelungsbolzen 10 anliegende Verriegelungshaken 12 durch den von den Antriebsmitteln auf die Trittplatte 3 her ausgeübten Zug nach hinten gezogen wird, legt sich die Verschlußklappe 8 in den Bereichen X1 und X2 in Fig. 5 fest an die Außenseite der Ränder des Gehäuses 2 an und dichtet dieses gegen Einflüsse von außen ab.

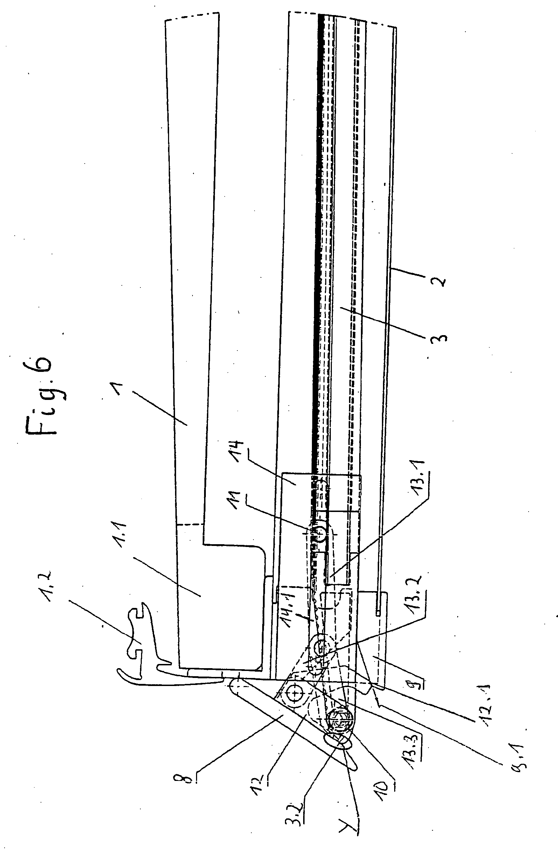

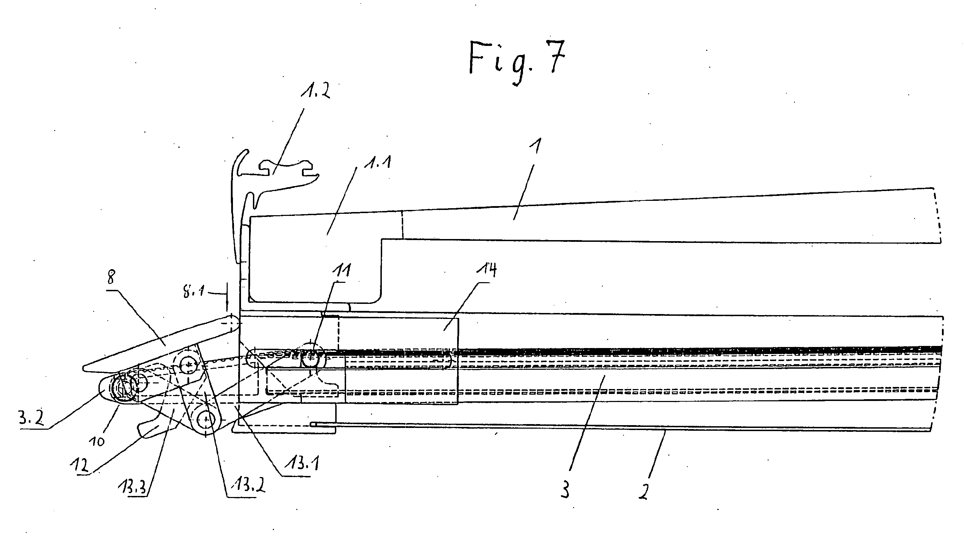

Wenn die Trittplatte 3 ausfährt, rückt ihr vorderes Ende 3.2, in den in Fig. 6 dargestellten Bereich Y gegen die Verschlußklappe 8. Infolge des hierdurch auf die Hebel 13.3 und 13.1 ausgeübten Zuges, bewegt sich der Führungsbolzen 11 im Führungsschlitz 14.1 der Führungsplatte 14 in Ausfahrrichtung. Wie Fig. 6 zu entnehmen, besitzt der Verriegelungshaken 12 an seinem unteren Ende eine Führungsfläche 12.1, die sich auf einer Gegenfläche abstützt, die nach außen schräg abfallend auf einem fest mit dem Gehäuse 2 verbundenen Profilstück 9 angeordnet ist und im weiteren Verlauf der Bewegung auf dieser Gegenfläche in Pfeilrichtung 9.1 gleitet. Hierdurch ist die Verschlußklappe in einer ersten Phase ihrer Öffnungsbewegung geführt. Im weiteren Verlauf der Ausfahrbewegung der Trittplatte 3 verschiebt sich der Führungsbolzen 11 weiter im Führungsschlitz 14.1, wodurch bewirkt wird, dass sich das hintere Ende der Verschlußklappe 8 in Pfeilrichtung 8.1 (Fig. 7) abwärts bewegt. Die Verschlußklappe 8 schwenkt also um eine freie horizontale Achse. Erreicht wird diese Bewegung durch entsprechende Ausbildung des zweiten, dritten und vierten Führungshebels 13.1 bis 13.3.

Im Zuge der weiteren Ausfahrbewegung der Trittplatte 3 legt sich die Verschlußplatte 8 zunächst auf das vordere Ende 3.2 der Trittplatte 3 auf und gleitet dann über die obere Fläche der Trittplatte 3. Fig. 8 zeigt eine Phase der Ausfahrbewegung kurz vor ihrem Ende. Die Verschlußklappe 8 hat sich auf das hintere Ende 3.1 der Trittplatte 3 aufgelegt. Fig. 9 zeigt den ausgefahrenen Zustand der Trittplatte 3 in der Arretierungsstellung erreicht ist. Die Verschlußklappe 8 überbrückt den Spalt zwischen dem hinteren Ende 3.1 der Trittplatte 3 und der Türschwellenstufe 1.1 im Bereich vor dem Dichtungsprofil 1.2.

Bei der Einfahrbewegung der Trittplatte 3 wird das hintere Ende 3.1 der Trittplatte 3 etwas abgesenkt und es laufen die anhand der Figuren 5 bis 9 dargestellten Bewegungen in umgekehrter Reihenfolge ab. Schließlich nach dem Einziehen der Trittplatte 3 gerät die Verschlußklappe 8 in die in Fig. 5 dargestellte verriegelte Verschlußstellung.

## Patentansprüche

1. Ausfahrbare Einstiegsrampe für Fahrzeuge des öffentlichen Personennah- und -fernverkehrs mit einer Trittplatte (3), die im eingefahrenen Zustand in einem unterhalb des Fahrzeugbodens (1) im Bereich hinter einer Türschwellenstufe (1.1) angeordneten Gehäuse (2) liegt, in welchem die Antriebs- und Führungsmittel für die Trittplatte angeordnet sind, und aus dem Gehäuse (2) in eine Gebrauchsstellung ausfahrbar ist, wozu das hintere Ende der Trittplatte (3.1) über gelenkig mit der Trittplatte verbundene erste Führungshebel (5) an einem im Gehäuse (2) geführten, von den Antriebsmitteln in Ausfahrrichtung verschiebbaren Transportelement (4) angelenkt ist und die ersten Führungshebel (5) in der letzten Phase der Ausfahrbewegung aus einer im wesentlichen in Ausfahrrichtung verlaufenden, mit dem Transportelement (4) eine Totpunktlage bildenden, Strecklage in eine Endlage hochklappbar sind, wodurch das hintere Ende (3.1) der Trittplatte angehoben wird und in der hochgeklappten Stellung arretiert ist und bei der die Ausfahröffnung des Gehäuses (2) mit einer beweglichen Verschlußklappe (8) verschließbar ist, deren Öffnungsbewegung durch das vordere Ende (3.2) der ausfahrenden Trittplatte (3) eingeleitet wird, und die im ausgefahrenen Zustand der Trittplatte (3) unmittelbar an den Fahrzeugboden (1) anschließend den Spalt zwischen der Türschwellenstufe (1.1) und dem hinteren Ende (3.1) der Trittplatte (3) überbrückt, wobei die Bewegung der Verschlußklappe (8) durch ein System gelenkig miteinander verbundener Führungshebel (13.1-13.3) umfassende beidseitig angeordnete Führungsmittel geführt ist, **gekennzeichnet durch** folgende Merkmale:
a) Die Verschlußklappe (8) ist ausschließlich über das System von Führungshebeln (13.1-13.3) mit dem Gehäuse (2) der Einstiegsrampe verbunden;
b) Das System von Führungshebeln besitzt jeweils einen zweiten Führungshebel (13.1), der an seinem in Ausfahrrichtung der Trittplatte (3) gesehen hinteren Ende über einen Führungsbolzen (11) in einem sich in Ausfahrrichtung erstreckenden Führungsschlitz (14.1) einer fest im Gehäuse (2) angeordneten Führungsplatte (14) verschiebbar und in einer vertikalen Ebene verschwenkbar geführt ist und an seinem vorderen Ende mit den hinteren Enden eines dritten und vierten Führungshebels (13.2, 13.3) gelenkig verbunden ist, die in vertikalen Ebenen verschwenkbar sind und deren vordere Enden jeweils an zwei in einer vertikalen Ebene liegenden Anlenkpunkten mit der Verschlußklappe (8) verbunden sind, wobei die Anordnung so ist, dass bei der Öffnungsbewegung der Verschlußklappe (8) diese um eine freie horizontale Achse verschwenkt wird und sich dabei auf die Oberseite der ausfahrenden Trittplatte (3) auflegt;
c) Die Verschlußklappe (8) besitzt an ihrer Innenseite einen fest mit ihr verbundenen, abwärts gerichteten, Verriegelungshaken (12), der im geschlossenen Zustand der Verschlußklappe (8) in einen Verriegelungsbolzen (10) eingreift, der am vorderen Ende (3.2) der Trittplatte (3) angeordnet ist.

2. Einstiegsrampe nach Anspruch 1, **dadurch gekennzeichnet, dass** die Anlenkpunkte des dritten und vierten Führungshebels (13.2, 13.3) am Verriegelungshaken (12) angeordnet sind.

3. Einstiegsrampe nach Anspruch 1 oder 2, **dadurch gekennzeichnet, dass** der Verriegelungshaken (12) an seinem unteren Ende eine Führungsfläche (12.1) aufweist, die mit einer fest mit dem Gehäuse verbundenen, nach außen schräg abfallenden, Gegenfläche zusammenwirkt zur Abstützung und Führung der Verschlußklappe (8) in einer ersten Phase der Öffnungsbewegung.

## Claims

1. An extendable boarding ramp for vehicles of regional and local public transport with a step plate (3), which, in the retracted position, is located in a housing (2) disposed underneath the vehicle floor (1) in the region behind a door threshold step (1.1) and accommodating the drive and guide means for said step plate, and which is extendable out of the housing (2) into a position of utilization, for which purpose the rear end of the step plate (3.1) is articulated via first guide levers (5) hinge-linked to said step plate on a transport element (4) that is displaceable by means of the drive means in the direction of extension and that is guided in said housing, the first guide levers (5) being foldable upward into an end position from an extended position running substantially in the direction of extension and forming a dead point position together with said transport element (4) in the last phase of the extension movement, this causing the rear end (3.1) of said step plate to be lifted and to be immobilized in the upward folded position, the extension opening of the housing (2) being adapted to be closed by a movable closing flap (8) the opening movement of which is triggered by the front end (3.2) of the extending step plate (3), said closing flap bridging, in the extended condition of the step plate (3), the gap directly adjoining the vehicle floor (1) between the door threshold step (1.1) and the rear end (3.1) of said step plate (3), the movement of said closing flap (8) being guided by a system of guide levers (13.1-13.3) that are hinge-linked to each other and that incorporate guide means, which are disposed on either side, **characterized by** the following features:
a) said closing flap (8) is connected to the housing (2) of the boarding ramp by the system of guide levers (13.1-13.3) only;
b) The system of guide levers respectively possesses a second guide lever (13.1) which, at its rear end when viewed in the direction of extension of the step plate (3), is displaceable in a guide slot (14.1) extending in the direction of extension of a guide plate (14) disposed fixedly in the housing via a guide bolt (11) and is guided for pivotal movement in a vertical plane and which is hinge-linked at its front end to the rear ends of a third and of a fourth guide lever (13.2, 13.3), which are pivotal in vertical planes and the front ends of which are connected to the closing flap (8) at two hinge points located in a vertical plane, said arrangement being such that the closing flap (8) is caused to pivot about a free horizontal axis during the opening movement thereof, thereby coming to lie on the top side of the extending step plate (3);
c) on its inner side, said closing flap (8) has a downward oriented locking hook (12) fixedly connected thereto, said locking hook engaging in a locking bolt (10) disposed at the front end (3.2) of the step plate (3) in the closed condition of the closing flap (8).

2. The boarding ramp as set forth in claim 1, **characterized in that** the articulation points of the third and of the fourth guide lever (13.2, 13.3) are disposed on the locking hook (12).

3. The boarding ramp as set forth in claim 1 or 2, **characterized in that** the locking hook (12) comprises at its lower end a guide surface (12.1), which cooperates with a matching surface fixedly connected to the housing and sloping obliquely outward for supporting and guiding the closing flap (8) in a first phase of the opening movement.

## Revendications

1. Rampe d'accès à des véhicules de transport public péri- et interurbains avec une marche (3) qui, à l'état escamoté, est située dans un boîtier (2) disposé en dessous du plancher (1) du véhicule, dans la zone située derrière un seuil de porte (1.1), et qui contient les moyens d'entraînement et de guidage de la marche qui peut être déployée du boîtier (2) jusque dans une position d'utilisation, l'extrémité arrière de la marche (3.1) étant articulée à cet effet, par des premier leviers de guidage (5) reliés à la marche, à un élément de transport (4) guidé dans le boîtier (2) et apte à être déplacé suivant la direction de déploiement par les moyens d'entraînement, et les premiers leviers de guidage (5) étant aptes à être relevés, depuis une position déployée s'étendant sensiblement dans la direction de déploiement et formant avec l'élément de transport (4) une position de point mort, dans une position d'extrémité dans la dernière phase du mouvement de déploiement, de sorte que l'extrémité arrière (3.1) de la marche est soulevée et est arrêtée en position relevée, l'ouverture de déploiement du boîtier (2) étant apte à être fermée par un abattant de fermeture (8) mobile dont le mouvement d'ouverture est amorcé par l'extrémité avant (3.2) de la marche (3) se déployant, cet abattant enjambant la fente entre le seuil de la porte (1.1) et l'extrémité arrière (3.1) de la marche située directement contiguë au plancher (1) du véhicule à l'état déployé de la marche (3), le mouvement de l'abattant de fermeture (8) étant guidé par un système de leviers de guidage (13.1-13.3) articulés l'un à l'autre et comportant des moyens de guidage disposés de part et d'autre, **caractérisé par** les particularités suivantes :
a) l'abattant de fermeture (8) est relié au boîtier (2) de la rampe d'accès par le système de leviers de guidage (13.1-13.3) uniquement ;
b) le système de leviers de guidage possède respectivement un deuxième levier de guidage (13.1) guidé mobile en pivotement dans un plan vertical et monté à son extrémité arrière vue dans le sens de déploiement de la marche (3), mobile en déplacement par un doigt de guidage (11) dans une fente de guidage (14.1) s'étendant dans le sens de déploiement d'une plaque de guidage (14) disposée fixement dans le boîtier (2) et qui est articulé par son extrémité avant aux extrémités arrières d'un troisième et d'un quatrième levier de guidage (13.2, 13.3) qui sont mobiles en pivotement dans des plans verticaux et dont les extrémités avant sont reliées à l'abattant de fermeture (8) en deux points d'articulation situés dans un plan vertical, l'arrangement étant tel que, lors du mouvement d'ouverture de l'abattant de fermeture (8), ce dernier pivote autour d'un axe horizontal libre et vient se poser sur la face supérieure de la marche (3) se déployant ;
c) l'abattant de fermeture (8) possède sur sa face interne un crochet de verrouillage (12) solidement relié à celui-ci et orienté vers le bas qui, à l'état de fermeture de l'abattant de fermeture (8), s'engage dans un doigt de verrouillage (10) disposé à l'extrémité avant (3.2) de la marche (3).

2. Rampe d'accès selon la revendication 1, **caractérisée en ce que** les points d'articulation du troisième et du quatrième levier de guidage (13.2, 13.3) sont disposés sur le crochet de verrouillage (12).

3. Rampe d'accès selon la revendication 1 ou 2, **caractérisée en ce que** le crochet de verrouillage (12) comporte à son extrémité inférieure une surface de guidage (12.1) qui coopère avec une surface complémentaire inclinée vers l'extérieur et solidement reliée au boîtier dans le but de soutenir et de guider l'abattant de fermeture (8) dans une première phase du mouvement d'ouverture.
